## Europäisches Patentamt

## European Patent Office

## Office européen des brevets

(19)

(11) Numéro de publication: **0 165 177**
**B1**

(12)

# FASCICULE DE BREVET EUROPÉEN

(45) Date de publication du fascicule du brevet:
**17.01.90**

(21) Numéro de dépôt: **85401154.1**

(22) Date de dépôt: **12.06.85**

(51) Int. Cl. ⁴: **B 01 J 13/00, B 01 J 37/34,**
**C 01 B 3/04, B 22 F 9/24**

(54) **Nouveaux microagrégats de métaux non nobles, procédé pour leur préparation et application à la catalyse de la photoréduction de l'eau.**

(30) Priorité: **13.06.84 FR 8409196**

(43) Date de publication de la demande:
**18.12.85 Bulletin 85/51**

(45) Mention de la délivrance du brevet:
**17.01.90 Bulletin 90/03**

(84) Etats contractants désignés:
**AT BE CH DE FR GB IT LI LU NL SE**

(56) Documents cité:
**DE-A-1 717 152
DE-B-1 154 442
FR-A-2 302 333
FR-A-2 493 181
US-A-1 805 199
US-A-2 870 000
US-A-4 264 421**

**Lectures on Electrochemical Corrosion,1973, p. 154 et suivantes**

(73) Titulaire: **CENTRE NATIONAL DE LA RECHERCHE SCIENTIFIQUE (CNRS)**
**15, Quai Anatole France**
**F-75700 Paris Cedex 07 (FR)**

(72) Inventeur: **Belloni née Cofier, Jacqueline**
**14, boulevard Palaiseau**
**F-91120 Palaiseau (FR)**
Inventeur: **Marignier, Jean-Louis**
**3, rue des Terre-Neuve**
**F-92190 Meudon (FR)**
Inventeur: **Delcourt née Euverte, Marie-Odile**
**7, avenue C.N. Ledoux**
**F-78470 Magny-Les-Hameaux (FR)**
Inventeur: **Minana née Lourseau, Michèle**
**105, rue du Clos Battant**
**F-78120 Rambouillet (FR)**

(74) Mandataire: **L'Helgoualch, Jean**
**Cabinet Yvette SUEUR 35, rue de la Frette**
**F-95240 CORMEILLES EN PARISIS (FR)**

LIBERGRAF, STOCKHOLM 1990

EP 0 165 177 B1

## Description

La présente invention concerne de nouveaux micro-agrégats métalliques, et plus particulièrement de nouvelles phases monodisperses de microagrégats métalliques de métaux non nobles, un procédé de préparation par réduction de sels métalliques par voie radiolytique, ainsi que leur application comme catalyseurs de réaction.

On connaît diverses méthodes physiques, chimiques ou physicochimiques pour préparer des phases métalliques dispersées. On peut par exemple broyer mécaniquement le métal puis le disperser dans le milieu choisi, ou effectuer une condensation sur un support, d'un métal préalablement vaporisé sous vide. On peut aussi opérer par réduction d'ions par l'hydrogène moléculaire à température élevée, ou par attaque basique d'un alliage de métaux, par exemple pour préparer du nickel de Raney. Les méthodes physicochimiques peuvent consister à réduire des ions métalliques à la surface d'une électrode, à effectuer une décharge dans une solution d'ions métalliques ou à effectuer une réduction photochimique.

Toutefois, ces méthodes connues ne permettent pas d'obtenir le métal à l'état de microagrégats de dimension inférieure à quelques nanomètres dispersés uniformément dans un milieu tant liquide que solide.

Par exemple, le brevet allemand 1 154 442 décrit la décomposition photochimique d'un composé métallique organique dans une solution d'un polymère éthylènique dans un hydrocarbure ou un éther pour obtenir une dispersion colloïdale de plomb, de zinc, de nickel ou de fer. Un procédé photochimique permet également d'obtenir un dépôt métallique sur un support, comme décrit au brevet US-4 264 421. Le brevet US-1 805 199 décrit la décomposition thermique d'un dérivé métallique procurant des particules colloïdales de plomb ou de nickel présentant en solution l'effet Tyndall caractéristique d'une dimension de particules supérieure à 100 nm. Le brevet allemand 1 717 152 décrit la préparation d'un catalyseur à base de nickel par vaporisation du métal à haute température pour obtenir des particules de dimension comprise entre 30 et 45 nm. Le brevet FR-A-2 493 181 décrit des microagrégats de rhodium formés par irradiation d'un sel sur un support de titanate de strontium. Il a été également proposé d'utiliser le rayonnement ionisant (photons $\gamma$, x ou électrons accélérés) pour réduire in situ des sels de métaux nobles à l'aide des électrons solvatés formés dans le solvant. Ce procédé présente l'avantage de produire des électrons solvatés en tous points du liquide, même à l'intérieur des micropores d'un support alvéolaire utilisé le cas échéant. Toutefois, les métaux ainsi préparés appartiennent au groupe des métaux nobles (Ir, Pt, Pd, Rh, Ru, Au, Ag), tandis que le procédé ne permet pas d'obtenir sous forme stable et très divisée, d'autres métaux, tels que le nickel, qui sont pourtant souvent utilisés dans divers catalyseurs de nombreuses réactions.

Ces difficultés résultent du fait que les métaux non précieux sont caractérisés par un potentiel redox plus propice à la corrosion, déplacé encore vers des valeurs défavorables pour les agrégats quasi-atomiques. La production de métaux dans un état d'extrême division ne peut être réussie qu'en évitant au moins partiellement la réaction inverse de corrosion au cours de la phase de nucléation de l'agrégat. Au delà d'une certaine taille, les particules sont stabilisées vis-à-vis du milieu ambiant.

Une autre difficulté apparaît dans le cas d'ions multivalents pour lesquels la réduction radiolytique progressive met en jeu des états partiellement réduits. Si ce procédé de réduction a l'avantage d'assurer la dispersion des atomes de métal naissant et de permettre de maîtriser leur agrégation, il présente, comme toute méthode fondée sur la réduction des ions, ces risques d'oxydation en retour du ou des états intermédiaires, risques qui s'ajoutent à ceux de la corrosion des agrégats au tout premier stade de leur croissance.

La présente invention a pour but de préparer des phases monodisperses de microagrégats de métaux non nobles, possédant des caractéristiques physico-chimiques spécifiques, utilisables notamment comme catalyseurs de réaction.

L'invention a donc pour objet des phases monodisperses de microagrégats de métaux non nobles, tels que le nickel, le cobalt, le cuivre, le mercure ou le plomb, ou d'alliages de tels métaux avec des métaux nobles ou non, de dimension inférieure à 5 nm, obtenus sans réducteurs chimiques, par réduction in situ de sels métalliques au moyen de rayonnements ionisants.

L'invention a également pour objet l'application des microagrégats de métaux non nobles comme catalyseurs de réaction, notamment pour la photoréduction de l'eau en hydrogène.

L'invention concerne encore un procédé permettant de préparer aisément par voie radiolytique de nouveaux microagrégats de métaux non nobles sous forme de phases monodisperses uniformes, dans un milieu liquide ou même solide.

Le procédé conforme à l'invention consiste à irradier un sel métallique, ou un mélange de sels, au moyen d'une source de rayonnement ionisant, et se distingue en ce qu'on dissout un sel de métal non noble ou un mélange de sels de métaux dont l'un au moins est un métal non noble, dans un solvant approprié, en présence d'un intercepteur de radicaux oxydants, et d'un agent tensioactif et/ou d'un support, puis on effectue une irradiation.

L'intercepteur de radicaux oxydants utilisé dans le procédé de l'invention est de préférence un alcool primaire ou secondaire tel que l'isopropanol, ou un formiate tel qu'un formiate de métal alcalin. Il peut être avantageux de choisir le formiate du métal que l'on veut réduire, par exemple le formiate de nickel. Ce composé est utilisé pour intercepter les radicaux oxydants formés dans la solution. En effet, la radiolyse des solutions produit, outre les électrons solvatés, des radicaux, tels que le radical OH' dans le cas de l'eau, qui peuvent oxyder en retour une partie des atomes provenant de la réduction par les électrons solvatés. L'addition d'un alcool primaire ou secondaire (RHOH) qui réagit rapidement avec les radicaux OH' pour donner de nouveaux radicaux R'OH réducteurs, permet d'augmenter le rendement en métal. On peut également utiliser l'ion formiate HCOO⁻ comme intercepteur de radicaux. Le produit de la réaction est alors le radical COO⁻ qui possède lui aussi un excellent pouvoir réducteur.

La concentration de l'intercepteur de radicaux est déterminée en fonction de la quantité de métal à produire, et donc de la dose nécessaire. La concentration de l'intercepteur de radicaux peut être par exemple comprise entre $10^{-2}$ et $1$ mol.$l^{-1}$.

Le rendement en métal, pour une dose donnée de rayonnement ionisant, est plus élevé pour les concentrations plus grandes de sels métalliques. Toutefois, si la concentration est trop grande, la force ionique plus importante du milieu accentue les agrégations de colloïdes et les particules obtenues ont alors une taille moins fine.

Le solvant utilisé est choisi en fonction du sel métallique, et peut être par exemple l'eau, l'acétonitrile, l'ammoniac, le tétrahydrofuranne, l'éthylènediamine ou un alcool. Le cas échéant, un agent mouillant usuel peut aussi être utilisé.

Comme indiqué ci-dessus, on opère en présence d'un agent tensioactif et/ou d'un support, c'est-à-dire en milieu liquide ou solide. L'agent tensioactif utilisé de préférence est l'alcool polyvinylique, en une concentration (en monomère) égale à plusieurs fois, par exemple 10 fois, celle des atomes métalliques. Au lieu de l'agent tensioactif, on peut utiliser un support approprié tel que des silices, des résines, des oxydes ($Al_2O_3$, $RuO_2$, $TiO_2$), des zéolithes, le carbone ou des sels insolubles comme le titanate de strontium ou le sulfure de cadmium, et les microagrégats métalliques se déposent alors sur ce support.

Suivant une forme de mise en oeuvre du procédé de l'invention, on peut opérer en milieu basique, et le pH peut être par exemple porté à 9 ou plus, et de préférence entre 10 et 11, par addition de soude ou d'ammoniaque. Il faut toutefois que le pH ne soit pas trop élevé afin d'éviter la précipitation de l'hydroxyde du métal par hydrolyse par le solvant.

Au contraire, un pH trop faible (acide ou faiblement basique) est défavorable à la stabilité des microagrégats métalliques. En effet, il faut éviter toute corrosion ou réoxydation du métal naissant sous l'action des oxydants présents dans le milieu. Or le proton solvaté $H^+$ peut avoir une action oxydante, et on sait que la formation d'une phase métallique divisée à partir du sel correspondant entraîne une acidification progressive du milieu. Aussi les agrégats métalliques ne se forment pas si le milieu est initialement acide ou faiblement basique, à moins d'augmenter sensiblement la concentration du métal ce qui peut constituer un inconvénient pour le contrôle de la nucléation.

En opérant dans des conditions de pH basique en présence d'un agent tensioactif tel que l'alcool polyvinylique et d'un intercepteur de radicaux oxydants tel que l'isopropanol, on peut améliorer sensiblement la production de microagrégats de métaux tels que le rhodium et le plomb.

Il peut s'avérer avantageux, conformément à l'invention, de faciliter la nucléation des atomes métalliques tels que Ni, Co, Fe, Cu, Hg, en les produisant en présence de microagrégats d'un métal noble tel que le palladium ou le platine dont la préparation est connue par ailleurs. Ces métaux, par exemple le platine ou le palladium, peuvent être ajoutés en faibles quantités, par exemple de 0,1 à 2 % en atomes du métal à réduire. Des quantités plus importantes, supérieures à 2 %, peuvent être utilisées dans le but de produire des alliages contenant du platine ou du palladium. On peut les préparer en ajoutant par avance une suspension de palladium ou de platine préalablement réduit, soit en procédant à la réduction radiolytique d'un mélange de sels. On obtient ainsi, selon la quantité de métal noble ajoutée, des suspensions de nickel à quelques ‰ en Pt ou Pd qui se trouvent au coeur de l'agrégat ou répartis comme dans un alliage.

On peut préparer ainsi des alliages de Ni, Co, Pb, Hg, Cu, Cd, en toutes proportions en Pd ou Pt, et des alliages de FeCu. Les analyses des diagrammes de diffraction montrent que les atomes sont régulièrement disposés dans les sites du réseau, comme dans une solution solide lorsque les métaux sont miscibles. Cette régularité de l'arrangement des atomes dans le cas d'un composé bimétallique est particulièrement remarquable.

Suivant une variante du procédé de l'invention, notamment dans le cas du nickel, il est avantageux d'effectuer l'irradiation en présence d'oxygène. En effet, l'addition d'une base à la solution, associée à la présence d'oxygène à pression réduite, permet de protéger les atomes naissants d'une oxydation en retour, en empêchant, par complexation avec l'oxygène, la réaction inverse de la valence intermédiaire avec le milieu. Dans le cas d'une solution de sel métallique de faible concentration (quelques $10^{-3}$ mol.$l^{-1}$) le métal ne se forme pas sous irradiation en milieu basique et en présence de gaz inerte, ou sous vide. En présence d'air, la réduction n'a pas lieu non plus à cause de la réaction des agents de réduction, les électrons solvatés, avec l'oxygène. Au contraire, l'addition d'une pression d'oxygène de 50 torrs environ permet au colloïde métallique de se former. Cet apport d'oxygène doit être éliminé après irradiation pour ne pas nuire à la stabilité du colloïde.

On obtient finalement une solution brune transparente caractéristique des solutions subcolloïdales. Pour certains métaux (Cu, Ni, Pb, Co, et alliages au-delà d'une certaine proportion de ces métaux) la couleur disparaît au contact de l'air, ce qui traduit la réoxydation du métal. Les solutions doivent donc être conservées sous vide ou sous atmosphère inerte (azote, argon).

Suivant une autre variante du procédé de l'invention, il peut être avantageux d'augmenter fortement la concentration de l'agent tensioactif. Dans ce cas la réduction radiolytique peut le cas échéant s'effectuer à un pH relativement faible, par exemple voisin de 7, sans qu'il soit nécessaire d'ajouter une base à la solution. Par exemple, pour une solution contenant comme agent tensioactif de l'alcool polyvinylique de concentration 0,2 mol.$l^{-1}$, la concentration en $Ni^{2+}$ étant de $2 \cdot 10^{-3}$ mol.$l^{-1}$, la réduction du métal s'effectue sous vide en milieu initialement neutre.

La concentration en sel métallique peut être comprise entre $10^{-4}$ et $10^{-1}$ mol.$l^{-1}$, et de préférence entre $10^{-3}$

et $10^{-2}$ mol.$l^{-1}$ environ. Il peut être avantageux, notamment dans le cas du nickel, d'utiliser un sel de concentration comprise entre $10^{-2}$ et 10 mol.$l^{-1}$ pour faciliter l'agrégation du métal. Les microagrégats de nickel peuvent alors être formés en présence d'un intercepteur de radicaux et d'un -agent tensioactif ou d'un support poreux sans addition de base, d'oxygène, de platine ou de palladium. Par exemple, la solution peut contenir le sel de nickel ($5 \cdot 10^{-2}$ mol.$l^{-1}$), l'alcool polyvinylique (quelques $10^{-1}$ mol.$l^{-1}$ en monomère) et l'isopropanol en concentration en rapport avec la quantité de nickel désirée (par exemple $10^{-2}$ à $10^{-1}$ mol.$l^{-1}$). L'irradiation forme des atomes de nickel à raison d'un atome par 200 eV d'énergie absorbée environ (50 eV dans le cas du formiate).

Le sel métallique peut être choisi parmi les sels usuels des métaux que l'on veut réduire. On peut utiliser par exemple un sulfate, un chlorure, un perchlorate, un formiate métallique. Le formiate présente l'avantage de procurer un anion qui joue le rôle d'intercepteur de radicaux.

L'irradiation est effectuée en utilisant toute source usuelle de rayonnement ionisant, à des doses qui sont fonction de la quantité de métal et qui peuvent être par exemple de l'ordre de 50 à 700 eV par atome de métal. On peut par exemple utiliser une source de rayonnement $\gamma$ (cobalt 60) de 0,2 à 0,5 M.rad/h pendant 1 à 20 heures. Les particules ferromagnétiques (Fe, Co, Ni) peuvent éventuellement être séparées de la solution par un champ magnétique.

Comme indiqué ci-dessus le procédé de l'invention permet de préparer des phases monodisperses de microagrégats de métaux non nobles, associés le cas échéant à un cométal, caractérisées par la dimension des microagrégats qui est inférieure à 5 nm, et de préférence inférieure à 3 nm environ, et par leur dispersion uniforme dans la solution ou sur le support, même à l'intérieur des micropores d'un support alvéolaire.

De plus, on peut disposer de microagrégats de métaux non nobles ou d'alliages, sous forme stable, utilisables dans diverses applications.

Le métal non noble peut être choisi parmi le nickel, le cobalt, le plomb, le mercure, le fer, le cuivre. Le cométal utilisé conjointement peut être choisi parmi les mêmes métaux ou les métaux nobles, et de préférence le platine et le palladium.

Les microagrégats obtenus peuvent être utilisés comme catalyseurs de réduction pour toutes les réactions catalysées habituellement par le nickel de Raney. Ils peuvent être utilisés soit seuls, soit déposés sur un support, en particulier pour la photoréduction de l'eau en hydrogène.

On sait que l'efficacité d'un catalyseur hétérogène dépend essentiellement de la vitesse des inter-réactions réversibles avec les molécules à l'interface entre phases, et par conséquent du degré de dispersion du catalyseur. Il est donc particulièrement utile de pouvoir disposer de catalyseurs, notamment de catalyseurs métalliques, finement divisés (en particulier à l'état de microagrégats) sous forme stable et homogène.

En ce qui concerne la dissociation photosensibilisée de l'eau dans un but de conversion et stockage de l'énergie solaire, on sait que l'emploi d'un catalyseur est indispensable pour réaliser le transfert concerté de plusieurs électrons. On constate que l'activité de microagrégats de nickel conformes à la présente invention est comparable à celle des meilleurs catalyseurs connus de cette réaction. Ainsi, pour une même concentration, les microagrégats de nickel ont une activité égale à environ 80 % de celle du platine, tandis que l'activité du nickel de Raney est pratiquement nulle. Les microagrégats suivant l'invention s'avèrent donc particulièrement avantageux sur le plan économique.

Les exemples donnés ci-après illustrent l'invention plus en détail sans en limiter la portée.

Dans le cas de la préparation d'un catalyseur pour voie sèche, on imprègne le support à concurrence du volume des pores avec la solution d'ions métalliques. Dans le cas d'un catalyseur pour voie humide, on ajoute à la solution d'ions soit le support divisé, soit l'agent tensioactif (alcool polyvinylique).

## Exemple 1

On prépare un solution subcolloïdale de nickel à la concentration de $2 \cdot 10^{-3}$ mol.$l^{-1}$ comme indiqué ci-après.

On dilue une solution commerciale de sulfate de nickel au titre choisi ($2 \cdot 10^{-3}$ mol.$l^{-1}$ soit 0,12 g.$l^{-1}$). On ajoute de l'alcool polyvinylique à raison de plus de 10 fois plus de monomères que d'atomes métalliques ($4,5 \cdot 10^{-2}$ mol.$l^{-1}$ soit 2 g.$l^{-1}$).

A cette solution, on ajout de l'alcool isopropylique à une concentration de 0,28 mol.$l^{-1}$, puis du chlorure de palladium (concentration $2 \cdot 10^{-4}$ mol.$l^{-1}$). On ajoute ensuite quelques gouttes de soude 0,5 M pour porter le pH à 10,6 environ, puis on dégaze la solution par pompage, et on irradie par une source de rayonnement $\gamma$ (cobalt 60) à raison de 700 eV par atome de métal (soit $3,3 \cdot 10^{20}$ eV.$g^{-1}$). La durée de l'irradiation est de 15 heures environ.

On obtient ainsi une solution brune transparente caractéristique des solutions subcolloïdales, qui reste stable et ne sédimente pas, même après une conservation de plusieurs mois sous atmosphère inerte. L'examen au microscope électronique montre que la taille des microagrégats est inférieure à 3 nm.

Le solvant peut être éliminé par évaporation pour la préparation d'un catalyseur pour voie sèche.

## Exemples 2 - 16

En procédant comme dans l'exemple 1, en présence ou en absence de chlorure de palladium, ou en le remplaçant par du sulfate de cuivre (ex. 8 et 9), le cas échéant sans addition de soude, on prépare des microagrégats métalliques

dans les conditions indiquées au tableau ci-après.

| Ex. N° | Sel métal. Conc.Mol.l⁻¹ | pH | Cométal Conc.Mol.l⁻¹ | Alcool Mol.l⁻¹ | Formiate Mol.l⁻¹ | P.V.A. Mol.l⁻¹ | Dose $10^{20}$ eV.g⁻¹ |
|---|---|---|---|---|---|---|---|
| 1 | $NiSO_4$ $2 \cdot 10^{-3}$ | 10,6 | $PdCl_2$ $2 \cdot 10^{-4}$ | 0,28 | | $4,5 \cdot 10^{-2}$ | 3,3 |
| 2 | $RhCl_3$ $10^{-3}$ | 8,9 | | 0,56 | | $10^{-2}$ | 0,72 |
| 3 | $NiSO_4$ $3 \cdot 10^{-3}$ | 10,2 | $PdCl_2$ $10^{-5}$ | 0,8 | | 0,14 | 3,3 |
| 4 | $NiSO_4$ $2 \cdot 10^{-3}$ | 8 | | 0,56 | | (*) | 3,3 |
| 5 | $CoSO_4$ $10^{-3}$ | 9,2 | $PdCl_2$ $5 \cdot 10^{-5}$ | 0,56 | | $9 \cdot 10^{-2}$ | 1,32 |
| 6 | $HgCl_2$ $10^{-3}$ | 11 | $PdCl_2$ $10^{-4}$ | 0,56 | | $9 \cdot 10^{-2}$ | 0,35 |
| 7 | $CuSO_4$ $10^{-3}$ | 10,2 | $PdCl_2$ $10^{-4}$ | 0,56 | | 0,1 | 0,33 |
| 8 | $FeSO_4$ $2 \cdot 10^{-3}$ | 10,4 | $CuSO_4$ $2 \cdot 10^{-3}$ | 0,11 | | 0,2 | 3,3 |
| 9 | $NiSO_4$ $5 \cdot 10^{-4}$ | 6,7 | $CuSO_4$ $5 \cdot 10^{-4}$ | 0,056 | | 0,2 | 1,1 |
| 10 | $CuSO_4$ $2 \cdot 10^{-3}$ | 10,4 | | 0,56 | | 0,2 | 3,3 |
| 11 | $PbClO_4$ $2 \cdot 10^{-3}$ | 8 | | 0,11 | | $2 \cdot 10^{-2}$ | 0,4 |
| 12 | $NiSO_4$ $2 \cdot 10^{-3}$ | 8,8 | (**) | 0,56 | | $9 \cdot 10^{-2}$ | 3,3 |
| 13 | $NiSO_4$ $2 \cdot 10^{-3}$ | 6,7 | | 0,28 | | 0,2 | 3 |
| 14 | $NiSO_4$ $5 \cdot 10^{-2}$ | 6,7 | | 0,028 | | 0,2 | 1,1 |
| 15 | $NiSO_4$ $5 \cdot 10^{-2}$ | 6,7 | | | 0,1 | 0,55 | 3,3 |
| 16 | $NiSO_4$ $1,5 \cdot 10^{-2}$ | 6,7 | | 0,56 | | (*) | 1,76 |

(*) $SiO_2$ (sphérosil) (**) pression $O_2$ : 50 torrs ($66.10^{-3}$ bar)

**Revendications**

1. Nouveaux microagrégats de métaux non nobles caractérisés en ce qu'ils sont sous forme de phase monodisperse en milieu liquide ou solide, et de taille uniformément inférieure à 5 nm.

2. Microagrégats de métaux non nobles selon la revendication 1, caractérisés en ce que la taille des microagrégats est inférieure à 3 nm.

3. Microagrégats de métaux non nobles selon l'une quelconque des revendications 1 et 2, caractérisés en ce que le métal non noble est associé à un cométal.

4. Microagrégats de métaux non nobles selon la revendication 3, caractérisés en ce que le cométal est choisi parmi le palladium, le platine et le cuivre.

5. Microagrégats de métaux non nobles selon l'une quelconque des revendications précédentes, caractérisés en ce que le métal non noble est choisi parmi le nickel, le cobalt, le plomb, le mercure, le fer, le cuivre.

6. Microagrégats de métaux non nobles selon l'une quelconque des revendications 1 à 5, caractérisés en ce qu'ils sont sous forme de solution subcolloïdale.

7. Microagrégats de métaux non nobles selon l'une quelconque des revendications 1 à 5, caractérisés en ce qu'ils sont sous forme de dépôt sur un support choisi parmi des silices, des résines, des oxydes, des zéolithes, le carbone et des sels insolubles comme le titanate de strontium ou le sulfure de cadmium.

8. Procédé de préparation de microagrégats de métaux non nobles en phases dispersées homogènes par irradiation d'un sel métallique, ou d'un mélange de sels, au moyen d'une source de rayonnement ionisant, caractérisé en ce qu'on dissout un sel de métal non noble ou un mélange de sels de métaux dont l'un au moins est un métal non noble, dans un solvant approprié, en présence d'un intercepteur de radicaux oxydants, et d'un agent tensioactif et/ou d'un support, puis on effectue une irradiation.

9. Procédé selon la revendication 8, caractérisé en ce que l'intercepteur de radicaux oxydants est un alcool primaire ou secondaire tel que l'isopropanol, ou un formiate tel qu'un formiate de métal alcalin.

10. Procédé selon la revendication 9, caractérisé en ce que l'intercepteur de radicaux est le formiate de nickel.

11. Procédé selon l'une quelconque des revendications 8 à 10, caractérisé en ce que l'agent tensioactif est l'alcool polyvinylique, en une concentration (en monomère) égale à plusieurs fois celle des atomes métalliques.

12. Procédé selon l'une quelconque des revendications 8 à 10, caractérisé en ce que le support est choisi parmi des silices, des résines, des oxydes, le carbone, des zéolithes, et des sels insolubles comme le titanate de strontium ou le sulfure de cadmium.

13. Procédé selon la revendication 8, caractérisé en ce que le pH est compris entre 10 et 11.

14. Procédé selon la revendication 8, caractérisé en ce que l'irradiation est effectuée en présence d'oxygène à pression réduite.

15. Procédé selon l'une quelconque des revendications 8 à 14, caractérisé en ce que la concentration du sel métallique est comprise entre $10^{-4}$ et $10^{-1}$ mol.l$^{-1}$.

16. Procédé selon l'une quelconque des revendications 8 et 13, caractérisé en ce qu'on ajoute du palladium ou du platine sous forme de métal préalablement divisé ou sous forme de sel, à raison de 0,1 à 2 % en atomes du métal à réduire.

17. Catalyseurs de la photoréduction de l'eau en hydrogène caractérisés en ce qu'ils sont constitués par les microagrégats de métaux selon l'une quelconque des revendications 1 à 7.


**Patentansprüche**

1. Neue Mikroaggregate aus Nichtedelmetallen, dadurch gekennzeichnet, daß sie in Form einer monodispersen Phase in einem flüssigen oder festen Milieu vorliegen und eine einheitliche Größe von kleiner als 5 nm haben.

2. Mikroaggregate von Nichtedelmetallen nach Anspruch 1, dadurch gekennzeichnet, daß die Größe der Mikroaggregate unter 3 nm liegt.

3. Mikroaggregate von Nichtedelmetallen nach einem der Ansprüche 1 und 2, dadurch gekennzeichnet, daß das Nichtedelmetall mit einem Cometall assoziiert ist.

4. Mikroaggregate von Nichtedelmetallen nach Anspruch 3, dadurch gekennzeichnet, daß das Cometall ausgewählt wird aus Palladium, Platin und Kupfer.

5. Mikroaggregate von Nichtedelmetallen nach einem der vorhergehenden Ansprüche, dadurch gekennzeichnet, daß das Nichtedelmetall ausgewählt wird aus Nickel, Kobalt, Blei, Quecksilber, Eisen und Kupfer.

6. Mikroaggregate von Nichtedelmetallen nach einem der Ansprüche 1 bis 5, dadurch gekennzeichnet, daß sie in Form einer subkolloidalen Lösung vorliegen.

7. Mikroaggregate von Nichtedelmetallen nach einem der Ansprüche 1 bis 5, dadurch gekennzeichnet, daß sie in Form einer Ablagerung auf einem Träger vorliegen, der ausgewählt wird aus Siliciumdioxiden, Harzen, Oxiden, Zeolithen, Kohlenstoff und unlöslichen Salzen wie Strontiumtitanat oder Cadmiumsulfid.

8. Verfahren zur Herstellung von Mikroaggregaten aus Nichtedelmetallen in Form von homogen dispergierten Phasen durch Bestrahlung eines Metallsalzes oder eines Gemisches von Salzen mit einer Quelle für ionisierende Strahlung, dadurch gekennzeichnet, daß man ein Nichtedelmetallsalz oder ein Gemisch von Metallsalzen, von denen mindestens eines ein Nichtedelmetall ist, in einem geeigneten Lösungsmittel löst in Gegenwart eines Fängers für oxidierende Radikale und eines oberflächenaktiven Agens und/oder eines Trägers, und daß man dann eine Bestrahlung durchführt.

9. Verfahren nach Anspruch 8, dadurch gekennzeichnet, daß es sich bei dem Fänger für oxidierende Radikale um einen primären oder sekundären Alkohol wie Isopropanol oder um ein Formiat wie ein Alkalimetallformiat handelt.

10. Verfahren nach Anspruch 9, dadurch gekennzeichnet, daß es sich bei dem Radikal-Fänger um Nickelformiat handelt.

11. Verfahren nach einem der Ansprüche 8 bis 10, dadurch gekennzeichnet, daß es sich bei dem oberflächenaktiven Agens um Polyvinylalkohol in einer Konzentration (als Monomeres) handelt, die gleich dem Mehrfachen derjenigen der Metallatome ist.

12. Verfahren nach einem der Ansprüche 8 bis 10, dadurch gekennzeichnet, daß der Träger ausgewählt wird aus Siliciumdioxiden, Harzen, Oxiden, Kohlenstoff, Zeolithen und unlöslichen Salzen wie Strontiumtitanat oder Cadmiumsulfid.

13. Verfahren nach Anspruch 8, dadurch gekennzeichnet, daß der pH-Wert zwischen 10 und 11 liegt.

## EP 0 165 177 B1

14. Verfahren nach Anspruch 8, dadurch gekennzeichnet, daß die Bestrahlung in Gegenwart von Sauerstoff bei vermindertem Druck durchgeführt wird.

15. Verfahren nach einem der Ansprüche 8 bis 14, dadurch gekennzeichnet, daß die Konzentration des Metallsalzes zwischen $10^{-4}$ und $10^{-1}$ Mol/l liegt.

16. Verfahren nach einem der Ansprüche 8 bis 13, dadurch gekennzeichnet, daß man Palladium oder Platin in Form des vorher zerkleinerten Metalls oder in Form eines Salzes in einer Menge von 0,1 bis 2 Atom-%, bezogen auf das zu reduzierende Metall, zugibt.

17. Katalysatoren für die Photoreduktion von Wasser zu Wasserstoff, dadurch gekennzeichnet, daß sie aus Mikroaggregaten von Nichtedelmetallen nach einem der Ansprüche 1 bis 7 bestehen.

## Claims

1. New non-noble metal microaggregates, characterized in that they are in a monodisperse phase in a liquid or solid medium, and have a size uniformly lower than 5 nm.

2. Non-noble metal microaggregates according to claim 1, characterized in that the size of the microaggregates is lower than 3 nm.

3. Non-noble metal microaggregates according to any one of claims 1 and 2, characterized in that the non-noble metal is associated with a cometal.

4. Non-noble metal microaggregates according to claim 3, characterized in that the cometal is selected from among palladium, platinum and copper.

5. Non-noble metal microaggregates according to any one of the preceding claims, characterized in that the non-noble metal is selected from among nickel, cobalt, lead, mercury, iron and copper.

6. Non-noble metal microaggregates according to any one of claims 1 to 5, characterized in that they are in the form of a subcolloidal solution.

7. Non-noble metal microaggregates according to any one of claims 1 to 5, characterized in that they in the form of a deposit on a support selected from the group consisting of silicas, resins, oxides, zeolites, carbon and insoluble salts such as strontium titanate or cadmium sulfide.

8. A method for the preparation of non-noble metal microaggregates in homogeneous dispersed phases by irradiation of a metal salt, or a mixture of salts, by means of an ionizing radiation source, characterized in that a non-noble metal salt or a mixture of metal salts, wherein at least one is a non-noble metal, is dissolved in a suitable solvent, in the presence of an oxidizing radical scavenger, and a surfactant and/or a support, and then irradiation is carried out.

9. A method according to claim 8, characterized in that the oxidizing radical scavenger is a primary or secondary alcohol such as isopropanol, or a formate such as an alkaline metal formate.

10. A method according to claim 8, characterized in that the radical scavenger is nickel formate.

11. A method according to any one of claims 8 to 10, characterized in that the surfactant is polyvinyl alcohol in a concentration (monomeric) equal to several times that of the metal atoms.

12. A method according to any one of claims 8 to 10, characterized in that the support is selected from the group consisting of silicas, resins, oxides, zeolites, carbon and insoluble salts such as strontium titanate or cadmium sulfide.

13. A method according to claim 8, characterized in that the pH is between 10 and 11.

14. A method according to claim 8, characterized in that the irradiation is carried out in the presence of oxygen under reduced pressure.

15. A method according to any one of claims 8 to 14, characterized in that the concentration of the metal salt is between $10^{-4}$ and $10^{-1}$ mol.l$^{-1}$.

16. A method according to any one of claims 8 and 13, characterized in that palladium or platinum in the form of previously divided metal or in the form of salt, is added in an amount of 0.1 to 2 % in atoms of the metal to be reduced.

17. Catalysts for the photoreduction of water into hydrogen, characterized in that they consist of the non-noble metal microaggregates according to any one of claims 1 to 7.